# EUROPEAN PATENT APPLICATION

(11) **EP 4 847 767 A1**
(43) Date of publication of application: **02.12.2026**
(21) Application number: 25178852.7
(22) Date of filing: 26.05.2025
(51) Int. Cl.: F03D 1/06, F03D 80/40

(54) **A WIND TURBINE ROTOR BLADE WITH A VORTEX GENERATOR AND A HEATING ELEMENT**

(71) Applicant: Nordex Energy SE & Co. KG, 22419 Hamburg (DE)
(72) Inventor: Lipka, Thomas, 22419 Hamburg (DE); Runge, Ines, 22419 Hamburg (DE)
(74) Representative: Völkl Siebenson Patentanwälte - Partnerschaft mbB

(57) **Abstract**

A wind turbine rotor blade comprising a leading edge, a trailing edge, a pressure side surface, a suction side surface, a vortex generator arranged on the suction side surface, a first type electrical heating element covering a section of the leading edge, wherein the first type electrical heating element has a suction side rear edge arranged on the suction side surface, wherein the suction side rear edge is arranged between the leading edge and the vortex generator and in a distance from the vortex generator, wherein the distance is selected such that a heated air flow coming from the electrical heating element reaches the vortex generator.

## Description

The invention relates to a wind turbine rotor blade comprising a leading edge, a trailing edge, a pressure side surface, a suction side surface, a vortex generator arranged on the suction side surface, and an electrical heating element.

A vortex generator is an aerodynamic device, consisting of a small vane attached to an aerodynamic surface, for example to a wind turbine rotor blade. When the rotor blade is in motion relative to the air, the vortex generator creates a vortex, which, by removing some part of the slow-moving boundary layer in contact with the airfoil surface, delays local flow separation and aerodynamic stalling, thereby improving the effectiveness of the wind turbine rotor blade. Vortex Generators can improve the aerodynamic performance of wind turbine rotor blades by reducing flow separation. This leads to more torque turning the rotor and thus more energy produced.

When operating wind turbines in cold climate conditions, ice may accumulate on the wind turbine rotor blades. This will decrease the aerodynamic performance. The ice also adds to the mass of the wind turbine rotor blade, leading to increased loads. Further, there is a risk that ice blocks falling down may cause damages and injuries.

To mitigate these ice-related problems, it is known to provide wind turbine rotor blades with a heating system including electrical heating elements. These are supplied with a heating current so that ice attached to a surface area covered by the heating element will melt (de-icing) or that the formation of ice will be prevented (anti-icing). The heating elements are arranged on the aerodynamic surface of the wind turbine rotor blade with a focus on the leading edge.

WO 2017/063927 A1 discloses a wind turbine rotor blade comprising at least one attachment part, such as a vortex generator, and a heating means integrated into a base section of the attachment part in order to heat the attachment part. **In** an embodiment, the heating means comprises a conduit for heated air with outlets arranged upstream of the attachment parts.

EP 2 843 228 A1 discloses a wind turbine rotor blade with an electrical heating system including a plurality of electrical heating elements arranged on an outer surface of a wind turbine rotor blade. Each of the heating elements has a carrier layer and a heating conductor arranged on the carrier layer between two opposite edges of the heating element in a meandering pattern. End sections of the heating conductor are connected to electrical supply lines arranged on the pressure side and on the suction side of the wind turbine rotor blade. The heating elements are connected in parallel to these supply lines.

US 11,920,557 B2 discloses a wind turbine rotor blade with a heating system having a first electrical heating element arranged at the leading edge and a second, strip-shaped electrical heating element arranged on the suction side surface adjacent to the first electrical heating element and in a distance from the leading edge. The second heating element has a higher heat flux than the first heating element, such that water droplets coming from the first heating element shall evaporate on the second heating element. This shall prevent formation of ice ridges caused by freezing droplets flowing past a trailing edge of the heating elements.

DE 10 2015 104 662 A1 discloses a wind turbine rotor blade having a heated surface area. Means for generating a turbulent boundary layer, e.g. vortex generators, are arranged in the heated surface area. This shall increase heat transfer from the heated surface area to the airflow surrounding the wind turbine rotor blade.

Departing therefrom, it is an object of the invention to provide a wind turbine rotor blade comprising a vortex generator and an electrical heating element that delivers increased power under icing conditions.

This object is solved by the wind turbine rotor blade with the features of claim 1. Aspects of the invention are given in the dependent claims.

The wind turbine rotor blade comprises a leading edge, a trailing edge, a pressure side surface, a suction side surface, a vortex generator arranged on the suction side surface, a first type electrical heating element covering a section of the leading edge, wherein the first type electrical heating element has a suction side rear edge arranged on the suction side surface, wherein the suction side rear edge is arranged between the leading edge and the vortex generator and at a distance from the vortex generator, wherein the distance is selected such that a heated air flow coming from the electrical heating element reaches the vortex generator.

The wind turbine rotor blade may be designed for a wind turbine rotor with a horizontal axis. The wind turbine rotor may comprise any number of wind turbine rotor blades, in particular two or three. The wind turbine rotor blade may comprise a fibre-reinforced composite material and may be manufactured in one piece or in longitudinal sections connected to one another. The wind turbine rotor blade or each of its longitudinal sections may comprise two half shells connected to each other, for example at the leading edge and at the trailing edge.

The first type electrical heating element is connected to an electrical power supply such that a surface area of the wind turbine rotor blade covered by the first type electrical heating element can be heated by means of a heating current guided through the first type electrical heating element, in order to prevent ice from accumulating on the surface or to melt ice existing on the surface. The first type electrical heating element can be connected to the electrical power supply by at least two electrical power supply lines. A first electrical power supply line may be connected to the first type electrical heating element at a first connection point arranged on the suction side surface. A second electrical power supply line may be connected to the first type electrical heating element at a second connection point arranged on the pressure side surface.

The surface of the wind turbine rotor blade covered by the first type electrical heating element includes a section of the leading edge and has a suction side rear edge arranged on the suction side surface. With regard to the lengthwise direction of the wind turbine rotor blade, which corresponds to a longitudinal axis of the wind turbine rotor blade, the first type electrical heating element may have a first edge facing a hub side end of the wind turbine rotor blade and a second edge facing a tip side end of the wind turbine rotor blade. The first edge and the second edge may be arranged each in a cross-sectional plane perpendicular to the longitudinal axis of the wind turbine rotor blade. In accordance with the invention, the suction side rear edge of the first type electrical heating element is arranged between the leading edge and the vortex generator and in a distance from the vortex generator. Hence, the vortex generator is not placed on the first type electrical heating element or within a surface area covered by the first type electrical heating element. In particular, the entire surface area covered by the first type electrical heating element (or covered by any other electrical heating element) may be free of any vortex generators.

The distance between the vortex generator and the suction side rear edge is selected such that a heated air flow coming from the electrical heating element reaches the vortex generator. In a direction of flow, the vortex generator is arranged behind the electrical heating element. Therefore, heated air passing by the electrical heating element will reach the vortex generator still at an elevated temperature with reference to an environmental air temperature. The temperature difference is capable of preventing formation of ice on the vortex generator or to melt the ice that has formed on the vortex generator. The vortex generator can be positioned on the suction side surface at the aerodynamically optimal position as long as the first type electrical heating element is positioned on the suction side surface such that the distance between the suction side rear edge and the vortex generator is sufficiently capable to heat up the vortex generator without compromising the heating of the pressure side of the rotor blade. It is then not required to provide the vortex generator with a separate heating means or to arrange the vortex generator on top of the electrical heating element, which is generally not desired to achieve a good bond of the vortex generator and to prevent an impairment of the electrical heating element.

In an aspect, the suction side rear edge is arranged between the leading edge and the vortex generator at a distance of 300 mm or less from the vortex generator, in particular at a distance of 200 mm or less from the vortex generator. A distance of less than 300 mm or less than 200 mm, in particular, leads to heated air coming from the first type electrical heating element reaching the vortex generator.

In an aspect, the first type electrical heating element has a pressure side rear edge arranged on the pressure side surface. This means the first type electrical heating element covers the wind turbine rotor blade's surface along a circumferential section from the suction side rear edge over the leading edge up to the pressure side rear edge. In particular, the first type heating element may have a substantially rectangular or trapezoidal shape arranged in a curved configuration on the wind turbine rotor blade's outer surface.

In an aspect, the first type electrical heating element has a suction side length measured along the suction side surface between the leading edge and the suction side rear edge and a pressure side length measured along the pressure side surface between the leading edge and the pressure side rear edge, wherein the suction side length is larger than the pressure side length. In particular, the suction side length may differ from the pressure side length by 100 mm or more, in particular by 400 mm or more. The first type electrical heating element is placed on the wind turbine blade's outer surface in an asymmetric fashion with reference to the leading edge. In general, the leading edge of a wind turbine rotor blade is most prone to the accumulation of ice and is also most important to be kept free of ice with regard to the aerodynamic performance of the wind turbine rotor blade. The susceptibility to an accumulation of ice generally decreases with growing distance from the leading edge. For this reason, conventional wind turbine rotor blade heating elements are generally positioned symmetrically with reference to the leading edge. In this aspect of the invention, however, the first type electrical heating element is arranged in an asymmetric fashion to have the suction side rear edge positioned near enough to the vortex generator, even if this shortens the section of the pressure side covered by the first type electrical heating element.

In an aspect, the first type electrical heating element comprises a heating wire arranged in a meandering pattern and comprises parallel sections of the heating wire. The electrical resistance of the heating wire and the specific arrangement thereof, in particular, the distance between adjacent parallel sections of the heating wire, determines the heating power of the first type electrical heating element per surface unit. This makes it possible to design the heating power of the first type electrical heating element according to the requirements. However, in general it is also possible to use a first type electrical heating element having a more homogeneous construction, such as a heating mat comprising a fabric of carbon fibres and/or of metal wires.

In an aspect, the meandering pattern comprises a mid-section covering the leading edge, a suction side section extending from the mid-section up to the suction side rear edge, and a pressure side section extending from the mid-section up to the pressure side rear edge, wherein adj acent parallel sections of the heating wire in the mid-section are arranged at a mid-section distance, adjacent parallel sections of the heating wire in the suction side section are arranged at a suction side section distance, and adjacent parallel sections of the heating wire in the pressure side section are arranged at a pressure side section distance, wherein the mid-section distance is smaller than the suction side section distance and/or smaller than the pressure side section distance. The dimensions of the suction side section and the pressure side section may be different, in particular, the suction side section may be longer (seen along the suction side surface perpendicular to the longitudinal axis of the wind turbine rotor blade) than the pressure side section, corresponding to the asymmetric arrangement of the first type electrical heating element. This specific design allows providing of the leading edge section with higher heating power.

In an aspect, the suction side section distance is smaller than the pressure side section distance. This leads to correspondingly higher heating power on of the suction side than on the pressure side, and helps keeping the vortex generator ice-free.

In an aspect, the suction side section is longer than the pressure side section and/or comprises a larger number of parallel sections of the heating wire. This also helps providing targeted heating power.

In an aspect, the wind turbine rotor blade comprises a second type electrical heating element covering a section of the leading edge and having a suction side rear edge arranged on the suction side surface, a pressure side rear edge arranged on the pressure side surface, a suction side length measured along the suction side surface between the leading edge and the suction side rear edge, and a pressure side length measured along the pressure side surface between the leading edge and the pressure side rear edge, wherein the suction side length and the pressure side length are the same. In other words, the second type electrical heating element is arranged on the wind turbine rotor blade's outer surface in a symmetric fashion with reference to the leading edge. If desired, one or more second type electrical heating elements can be arranged on the wind turbine rotor blade in longitudinal sections where no vortex generators are needed. The suction side length and the pressure side length of the second type electrical heating element can be shorter, longer or equal to the suction side length of the first type electrical heating element. In the alternative, a symmetrical, second type electrical heating element can also be combined with a vortex generator on the suction side surface when the dimensions of the second type electrical heating element are selected such that the distance between the suction side rear edge of the second type electrical heating element and the vortex generator is within the desired range.

In an aspect, the second type electrical heating element is arranged closer to a rotor blade tip than the first type electrical heating element. In particular, second type electrical heating elements can be used in an outboard section of the wind turbine rotor blade where no vortex generators are positioned.

In an aspect, a plurality of first type electrical heating elements forms a set of heating elements. The first type electrical heating elements comprised in the set can be arranged next to each other, so that a certain, essentially uninterrupted longitudinal section of the wind turbine rotor blade is covered by the set. In particular, all first type electrical heating elements of the set may have different dimensions, in particular different suction side lengths, so that the suction side rear edges are arranged at the desired distance in front of the corresponding vortex generators.

In an aspect, the heating elements of the set have the same pressure side length. Then, on the pressure side surface, only those parts that require heating power are provided with a heating element.

In an aspect, the wind turbine rotor blade comprises a first plurality of vortex generators arranged on the suction side surface along a first line at a distance from the leading edge, and the set of electrical heating elements each have a suction side rear edge arranged on the suction side surface, wherein each of the suction side rear edges are arranged in between the leading edge and the first line such that the suction side rear edges are arranged at a distance from the first line, wherein the distance is selected such that a heated air flow coming from the respective electrical heating element reaches one of the plurality of vortex generators. In this aspect, the shape of each of the electrical heating elements of the set is adapted such that one of the vortex generators can be kept ice-free.

In an aspect, at least one of the suction side rear edges is arranged at an oblique angle with reference to a longitudinal axis of the wind turbine rotor blade, such that the suction side rear edge is parallel to the first line.

In an aspect, the set of heating elements comprises at least a first subset of electrical heating elements and a second subset of electrical heating elements, each of the heating elements having a suction side rear edge arranged on the suction side surface, wherein each of these suction side rear edges is arranged between the leading edge and the first line of vortex generators, wherein each of the heating elements of the first subset has the same, first total length, and each of the heating elements of the second subset has the same, second total length, wherein the first total length is different from the second total length. The total length of a heating element is measured along the wind turbine rotor blade's outer surface, between the suction side rear edge and the pressure side rear edge. The total length corresponds to the sum of the suction side length and the pressure side length as discussed above. Using different subsets of identical heating elements helps keeping the complexity of the wind turbine rotor blade heating low and is more cost-efficient than designing and manufacturing a larger number of different heating elements.

In the following, the invention is explained in greater detail with reference to drawings. The drawings show:
- Fig. 1: a wind turbine rotor blade in a perspective view,
- Fig. 2: the wind turbine rotor blade of Fig. 1 in cross-section,
- Fig. 3: a detail of Fig. 2,
- Fig. 4: a first type heating element in a schematic view.

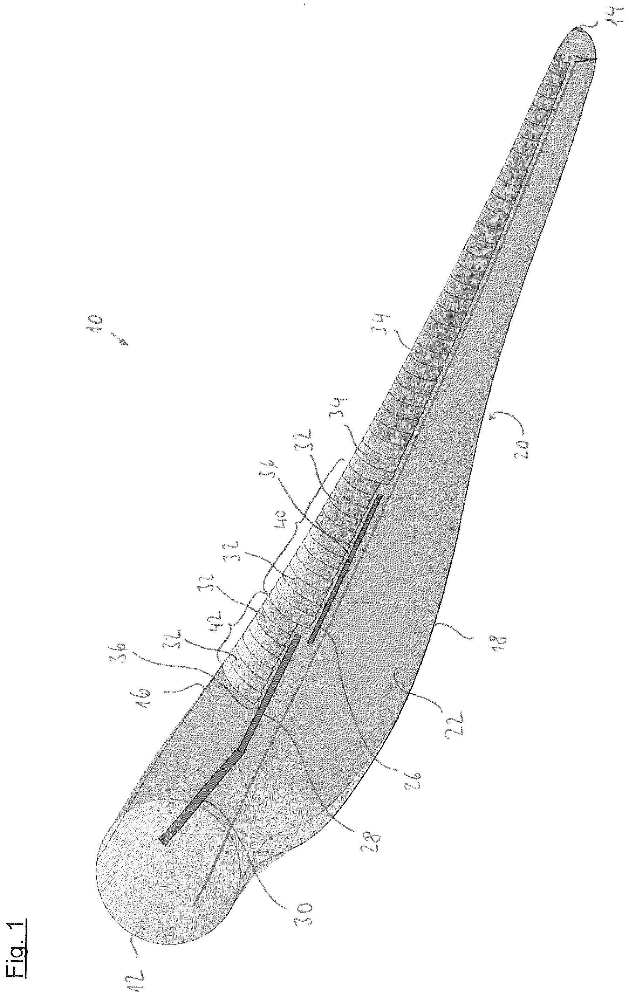

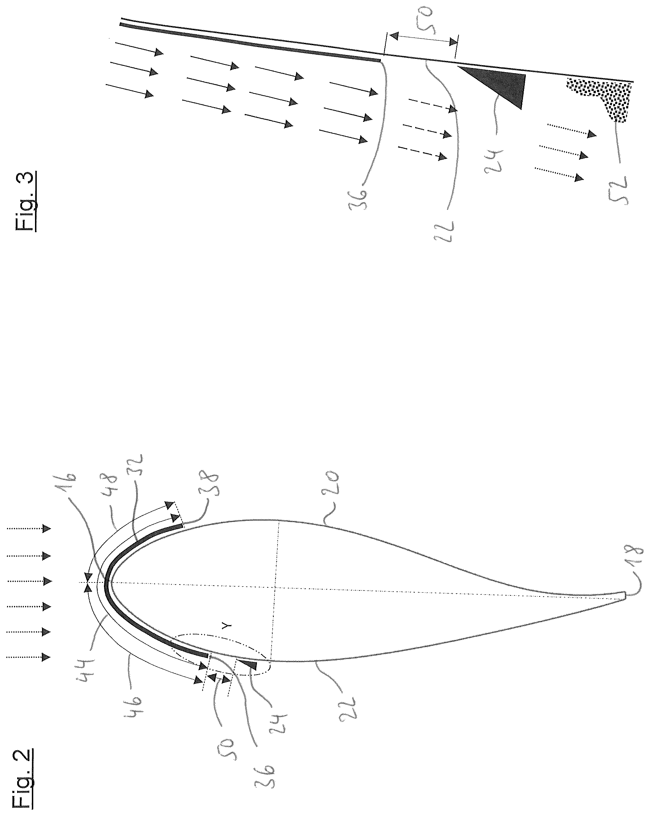

The wind turbine rotor blade 10 of Fig. 1 has a blade root 12, a blade tip 14, a leading edge 16, a trailing edge 18, a pressure side surface 20 (away from the viewer) and a suction side surface 22. A plurality of vortex generators 24 (see figure 2) are arranged on the suction side surface 22. The vortex generators 24 are arranged along a first line 26, along a second line 28 and along a third line 30. The first line 26, the second line 28 and the third line 30 are arranged in an inboard longitudinal section of the wind turbine rotor blade 10.

Near the first line 26, the wind turbine rotor blade 10 comprises a plurality of first type heating elements 32. Further first type heating elements 32 are arranged near the second line 28. In an outboard longitudinal section between the first line 26 and the blade tip 14, the wind turbine rotor blade 10 does not comprise additional vortex generators. In this outboard longitudinal section, a plurality of second type heating elements 34 are arranged.

Each of the first type heating elements 32 covers a section of the leading edge 16 and comprises a suction side rear edge 36 which is arranged between the leading edge 16 and the first line 26 or the second line 28, respectively. On the pressure side 20, each of the first type heating elements 32 comprises a pressure side rear edge 38 (see Fig. 2). Similarly, each of the second type heating elements 34 comprises a suction side rear edge 36 on the suction side 22 and a pressure side rear edge 38 on the pressure side 20.

Figure 1 further shows that the first type heating elements 32 are arranged in sets. A first set 40 of first type heating elements 32 is arranged near the first line 26. A second set 42 of first type heating elements 32 is arranged near the second line 28. The first set 40 of heating elements as well as the second set 42 of heating elements each comprise first and second subsets of heating elements which are shown in Fig. 1 with different shading.

Figure 2 shows a cross-section through the wind turbine rotor blade of Fig. 1 at a longitudinal position comprising the first line 26 where one of the vortex generators 24 is positioned on the suction side surface 22. The pressure side surface 20 is shown to the right of Fig. 2. The leading edge 16 and the trailing edge 18 are also indicated. The direction of flow is indicated by six arrows shown in dotted lines.

One can see that the first type heating element 32 covers a section of the leading edge 16 and extends from the suction side rear edge 36 to the pressure side rear edge 38. The first type heating element 32 has a total length 44 measured along the wind turbine rotor blade's outer surface from the suction side rear edge 36 to the pressure side rear edge 38.

The pressure side length 44 of the first type heating element 32 extends from the leading edge 16 to the pressure side rear edge 38. The suction side length 46 extends from the leading edge 16 to the suction side rear edge 36. The suction side length 46 is significantly larger than the pressure side length 44. The distance 50 between the vortex generator 24 and the suction side rear edge 36 in the example shown is about 200 mm.

This can be seen more clearly in the enlarged view of Fig. 3, which corresponds to the section labelled "Y" in Fig. 2. The airflow in the vicinity of the first type heating element 32 is fully heated and is indicated in Fig. 3 by the arrows shown in full lines.

When the heated air flow passes the suction side rear edge 38 and flows towards the vortex generator 24, the airflow starts cooling down, but, nevertheless, reaches the vortex generator 24 with a temperature warm enough to keep the vortex generator 24 free from ice formation. The airflow partly cooled down is indicated by arrows shown in dashed lines. At a distance farther from the suction side rear edge 38, the airflow gets cooled down essentially to an ambient temperature, which is indicated in figure 3 by the arrows shown in dotted lines. In this region, the airflow may not be warm enough to prevent icing on the wind turbine rotor blade's outer surface, as indicated by some ice 52 which may get accumulated behind the vortex generator 24 and at a distance thereof.

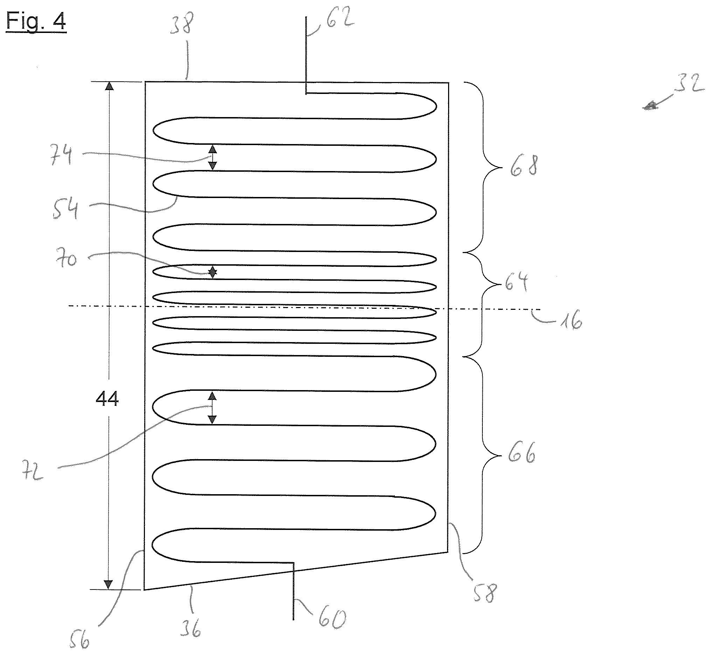

Figure 4 shows schematically a first type heating element 32 comprising a heating wire 54 arranged in a meandering pattern. The first type heating element 32 is shown flat, before it is arranged on the wind turbine rotor blade's outer surface. The first type electrical heating element 32 has a pressure side rear edge 38 and a suction side rear edge 36. To the left of Fig. 4, the first type electrical heating element 32 has a first, straight edge 56 which will be arranged perpendicular to a longitudinal axis of the wind turbine rotor blade 10. To the right of Fig. 4, the first type electrical heating element 32 has a second, straight edge 58 parallel to the first edge 56. The first edge 56, the pressure side rear edge 38, the second edge 58 and the suction side rear edge 36 form a trapezoid circumscribing a heatable surface area of the wind turbine rotor blade 10. The suction side rear edge 36 is arranged obliquely with reference to a longitudinal axis of the wind turbine rotor blade 10.

The heating wire 54 has a first end 60 adapted to be connected to a first electrical supply line arranged on the suction side of the wind turbine rotor blade 10, and a second end adapted to be connected to a second electrical supply line arranged on a pressure side.

The meandering pattern formed by the heating wire 54 comprises a mid section 64 which will cover the leading edge 16 when the first type electrical heating element 32 is placed on the wind turbine rotor blade's outer surface. The meandering pattern further comprises a suction side section 66 extending from the mid-section 64 up to the suction side rear edge 36, and a pressure side section 68 extending from the mid-section 64 to the pressure side rear edge 38.

In the mid-section 64, the heating wire 54 comprises adjacent, parallel sections arranged at a mid-section distance 70. In the suction side section 64, the heating wire 54 comprises adjacent, parallel sections arranged at a suction side section distance 72. In the pressure side section 68, the heating wire 54 comprises adjacent, parallel sections arranged at a pressure side section distance 74. The mid section distance 70 is smaller than the suction side section distance 72 and smaller than the pressure side section distance 74.

### List of reference numerals

- 10: wind turbine rotor blade
- 12: blade root
- 14: blade tip
- 16: leading edge
- 18: trailing edge
- 20: pressure side surface
- 22: suction side surface
- 24: vortex generator
- 26: first line
- 28: second line
- 30: third line
- 32: first type electrical heating element
- 34: second type electrical heating element
- 36: suction side rear edge
- 38: pressure side rear edge
- 40: first set of heating elements
- 42: second set of heating elements
- 44: total length
- 46: suction side length
- 48: pressure side length
- 50: distance
- 52: accumulated ice
- 54: heating wire
- 56: first edge
- 58: second edge
- 60: first end
- 62: second end
- 64: mid section
- 66: suction side section
- 68: pressure side section
- 70: mid section distance
- 72: suction side section distance
- 74: pressure side section distance

## Claims

1. A wind turbine rotor blade (10) comprising a leading edge (16), a trailing edge (18), a pressure side surface (20), a suction side surface (22), a vortex generator (24) arranged on the suction side surface (22), a first type electrical heating element (32) covering a section of the leading edge (16), wherein the first type electrical heating element (32) has a suction side rear edge (36) arranged on the suction side surface (22), **characterized in that** the suction side rear edge (36) is arranged between the leading edge (16) and the vortex generator (24) and in a distance (50) from the vortex generator (24), wherein the distance (50) is selected such that a heated air flow coming from the electrical heating element reaches the vortex generator (24).

2. The wind turbine rotor blade (10) of claim 1, wherein the suction side rear edge (36) is arranged between the leading edge (16) and the vortex generator (24) at a distance (50) of 300 mm or less from the vortex generator (24), in particular at a distance (50) of 200 mm or less from the vortex generator (24).

3. The wind turbine rotor blade (10) of claim 1 or 2, wherein the first type electrical heating element (32) has a pressure side rear edge (38) arranged on the pressure side surface (20).

4. The wind turbine rotor blade (10) of claim 3, wherein the first type electrical heating element (32) has a suction side length (46) measured along the suction side surface (22) between the leading edge (16) and the suction side rear edge (36) and a pressure side length (48) measured along the pressure side surface (20) between the leading edge (16) and the pressure side rear edge (38), wherein the suction side length (46) is larger than the pressure side length (48).

5. The wind turbine rotor blade (10) of any of the claims 1 to 4, wherein the first type electrical heating element (32) comprises a heating wire (54) arranged in a meandering pattern and comprises parallel sections of the heating wire.

6. The wind turbine rotor blade (10) of claim 5, wherein the meandering pattern comprises a mid section (64) covering the leading edge (16), a suction side section (66) extending from the mid section (64) up to the suction side rear edge (36), and a pressure side section (68) extending from the mid section (64) up to the pressure side rear edge (38), wherein adjacent parallel sections of the heating wire (54) in the mid section (64) are arranged at a mid section distance (70), adjacent parallel sections of the heating wire (54) in the suction side section (66) are arranged at a suction side section distance (72), and adjacent parallel sections of the heating wire (54) in the pressure side section (68) are arranged at a pressure side section distance (74), wherein the mid section distance (70) is smaller than the suction side section distance (72) and/or smaller than the pressure side section distance (74).

7. The wind turbine rotor blade (10) of claim 6, wherein the suction side section distance (72) is smaller than the pressure side section distance (74).

8. The wind turbine rotor blade (10) of claim 6 or 7, wherein the suction side section (66) is longer than the pressure side section (68) and/or comprises a larger number of parallel sections of the heating wire (54).

9. The wind turbine rotor blade (10) of any of the claims 1 to 8, wherein the wind turbine rotor blade (10) comprises a second type electrical heating element (42) covering a section of the leading edge (16) and having a suction side rear edge (36) arranged on the suction side surface (22), a pressure side rear edge (38) arranged on the pressure side surface (20), a suction side length (46) measured along the suction side surface (22) between the leading edge (16) and the suction side rear edge (36), and a pressure side length (48) measured along the pressure side surface (20) between the leading edge (16) and the pressure side rear edge (38), wherein the suction side length (46) and the pressure side length (48) are the same.

10. The wind turbine rotor blade (10) of claim 9, wherein the second type electrical heating element (42) is arranged closer to a rotor blade tip (14) than the first type electrical heating element (32).

11. The wind turbine rotor blade (10) of any of the claims 1 to 10, wherein a plurality of first type electrical heating elements (32) forms a set (40, 42) of heating elements.

12. The wind turbine rotor blade (10) of claim 11, wherein the heating elements of the set (40, 42) have the same pressure side length (48).

13. The wind turbine rotor blade (10) of claim 11 or 12, wherein the wind turbine rotor blade (10) comprises a first plurality of vortex generators (24) arranged on the suction side surface (22) along a first line (26) at a distance (50) from the leading edge (16), and the set (40, 42) of electrical heating elements each have a suction side rear edge (36) arranged on the suction side surface (22), wherein each of these suction side rear edges (36) is arranged between the leading edge (16) and the first line (26) at a distance (50) from the first line (26), wherein the distance (50) is selected such that a heated air flow coming from the respective electrical heating element reaches one of the plurality of vortex generators (24).

14. The wind turbine rotor blade (10) of any of claim 13, wherein at least one of the suction side rear edges (36) is arranged at an oblique angle with reference to a longitudinal axis of the wind turbine rotor blade (10) such that the suction side rear edge (36) is parallel to the first line (26).

15. The wind turbine rotor blade (10) of claim 13 or 14, wherein the set (40, 42) of heating elements comprises at least a first sub-set of electrical heating elements and a second sub-set of electrical heating elements, each of the heating elements having a suction side rear edge (36) arranged on the suction side surface (22), wherein each of these suction side rear edges (36) is arranged between the leading edge (16) and the first line (26) of vortex generators (24), wherein each of the heating elements of the first sub-set has the same, first total length (44), and each of the heating elements of the second sub-set has the same, second total length (44), wherein the first total length (44) is different from the second total length (44).
